Europäisches Patentamt

European Patent Office

Office européen des brevets

(11) Numéro de publication : **0 338 870 B1**

# (12) FASCICULE DE BREVET EUROPEEN

(45) Date de publication du fascicule du brevet :
22.04.92 Bulletin 92/17

(51) Int. Cl.⁵ : **C08F 212/08,** C09J 125/14

(21) Numéro de dépôt : **89400509.9**

(22) Date de dépôt : **23.02.89**

(54) **Dispersion aqueuse de polymères du type styrène-acrylique et son application pour l'obtention de compositions adhésives résistant à l'eau convenant notamment dans le domaine du carrelage.**

(30) Priorité : **24.02.88 FR 8802215**

(43) Date de publication de la demande :
**25.10.89 Bulletin 89/43**

(45) Mention de la délivrance du brevet :
**22.04.92 Bulletin 92/17**

(84) Etats contractants désignés :
**AT BE CH DE ES FR GB GR IT LI LU NL SE**

(56) Documents cités :
**FR-A- 2 320 319**
**GB-A- 2 061 990**

(73) Titulaire : **SOCIETE FRANCAISE HOECHST**
**Société anonyme dite:**
**3, avenue du Général de Gaulle**
**F-92800 Puteaux (FR)**

(72) Inventeur : **Chevalier, Pierre**
**20, Rue du Commandant Mouchotte**
**F-75014 Paris (FR)**
Inventeur : **Sidot, Christian**
**Résidence des Fleurs Avenue Foch**
**F-95460 Ezanville (FR)**

(74) Mandataire : **Rinuy, Santarelli**
**14, avenue de la Grande Armée**
**F-75017 Paris (FR)**

## Description

La présente invention concerne une dispersion aqueuse de polymères du type styrène-acrylique et son application pour l'obtention de compositions adhésives résistant à l'eau convenant notamment dans le domaine du carrelage.

Les dispersions aqueuses de polymères styrène-acrylique sont largement utilisées dans la préparation de compositions adhésives mais elles fournissent généralement des collages très sensibles à l'humidité. Pour leur application dans le domaine des colles pour carreaux, on a tenté d'améliorer leur résistance à l'eau en leur incorporant divers additifs, généralement des produits minéraux (cf par exemple, demandes de brevet européen N° 0.035.353 et 0.182.628, demande de brevet britannique N° 2.061.990 ou brevet des Etats-Unis d'Amérique n° 4.590.230) mais les résultats obtenus, quoique satisfaisants pour les carrelages classiques d'intérieurs, ne sont pas encore suffisamment efficaces pour les carrelages extérieurs exposés aux intempéries.

Afin d'obvier à cet inconvénient, la demanderesse a découvert une dispersion aqueuse de polymères du type styrène-acrylique qui autorise l'obtention de compositions adhésives susceptibles, notamment, d'être utilisées comme colles pour carreaux et conduisant à des collages résistant à l'eau.

La dispersion aqueuse de polymères du type styrène-acrylique, selon la présente invention, est caractérisée par le fait qu'elle contient au moins un copolymère à base de 0,5 à 5% en poids du monomère (A) N-allyl acétoacétamide, et de 99,5 à 95% en poids d'un mélange de monomères (B) constitué par 90 à 99,9% en poids de styrène et d'au moins un monomère choisi parmi les (meth) acrylates d'alkyle en $C_1$-$C_8$, et de 10 à 0,1% en poids d'au moins un monomère choisi parmi l'acide acrylique, l'acide méthacrylique, l'acrylamide et le méthacrylamide.

L'expression (meth) acrylate d'alkyle en $C_1$-$C_8$ peut désigner, par exemple, l'acrylate de méthyle, l'acrylate d'éthyle, l'acrylate de butyle, l'acrylate d'éthyl-2 hexyle, le méthacrylate de méthyle, le méthacrylate d'éthyle, le méthacrylate de butyle, le méthacrylate d'éthyle-2 hexyle.

Le copolymère faisant partie de la dispersion selon l'invention présente une température de transition vitreuse, Tg, comprise entre 5 et 50°C, avantageusement comprise entre 20 et 40°C et il peut n'être constitué que des motifs monomères A et B cités ci-dessus. Toutefois, il peut aussi comprendre, en outre, pour 100 parties en poids des monomères A et B, jusqu'à 3 parties en poids d'au moins un monomère réticulant classique choisi parmi les N-alphahydroxyalkylamides des acides acrylique et méthacrylique tels que le N-méthylol (méth) acrylamide, les oligoacrylates et oligométhacrylates de polyols tels que le triméthylolpropane tri (méth) acrylate.

La dispersion aqueuse selon l'invention a généralement une teneur en matières solides comprise entre 40 et 65% en poids, et elle peut être obtenue par un procédé classique de polymérisation en émulsion aqueuse des monomères A et B, effectuée à un pH acide, avantageusement compris entre 4 et 6, en présence, de 0,5 à 10% en poids par rapport au poids des monomères, d'au moins un agent dispersant non-ionique ou anionique, de 0,1 à 3% en poids par rapport au poids des monomères, d'au moins un amorceur de polymérisation, générateur de radicaux libres, tel que persulfate d'ammonium associé éventuellement à un accélérateur tel que le métabisulfite de sodium, et enfin, éventuellement de 0,01 à 0,5% en poids par rapport au poids des monomères, d'au moins un agent de transfert tel qu'un alkylmercaptan comme le n-dodécylmercaptan.

La présente invention a également pour objet l'application de la dispersion aqueuse telle que définie précédemment à l'obtention de compositions adhésives. Ces compositions adhésives contiennent pondéralement de 2 à 50% de dispersion selon la présente invention, et le complément à 100% est constitué par les ingrédients habituels à ce type de composition, tels que des charges minérales, des solvants organiques, des agents conservateurs bactéricide, dispersant, et/ou épaississant. Elles sont très aisément obtenues par simple mélange de leurs constituants, et elles conduisent à des collages présentant une haute résistance à l'état humide, notamment dans la pose des carreaux sur béton extérieur, aussi bien en position horizontale que verticale.

Les exemples ci-après illustrent l'invention sans toutefois la limiter.

## EXEMPLE 1

Dans un réacteur de polymérisation, on place 503g d'eau, 3,2g de nonylphénol éthoxylé avec 30 moles d'oxyde d'éthylène, 1,8g d'un copolymère séquencé oxyde de propylène-oxyde d'éthylène séquencé et sulfaté de poids moléculaire d'environ 2600, désigné par la suite émulsifiant E, et 0,58g de persulfate d'ammonium.

Dans cette solution agitée et maintenue à 85±2°C, on introduit en 4 heures environ, 1427g d'une émulsion aqueuse constituée par :
– 384,04g d'eau,

EP 0 338 870 B1

– 24 g de nonylphénol éthoxylé avec 30 moles d'oxyde d'éthylène,
– 14,2 g d'émulsifiant E
– 1,16 g de persulfate d'ammonium,
– 989,4 g des monomères suivants :

```
.  Styrène              :  486,8g   49,2%
.  Acrylate de n-butyle :  420,5g   42,5%
.  Méthacrylamide       :   23,7g    2,4%
.  Acide acrylique      :    9,9g    1  %
.  Acide méthacrylique  :   19,8g    2  %
.  N-allyl acétoacétamide :  28,7g   2,9%
```

Puis on introduit dans le milieu réactionnel une solution de 0,2g de persulfate d'ammonium dans 26g d'eau et on poursuit la réaction pendant 30minutes à 85±2°C. Après refroidissement à la température ambiante et filtration, on obtient 1963,6g de dispersion aqueuse à 53% environ d'extrait sec, présentant une viscosité Brookfield de 830mPa.s (axe2vitesse 20) et un pH de 4,4.

## EXEMPLE 2

On opère comme dans l'exemple 1, au départ d'un pied de cuve constitué par 190g d'eau et d'une pré-émulsion contenant :
– 649g de monomères dont :
. 357g (55%) de styrène
. 256g (39,4%) d'acrylate de n-butyle
. 14g (2,2%) de méthacrylamide
. 3g (0.4%) d'acide méthacrylique
. 19g (2,9%) de N-allyl acétoacétamide
– 174 g d'eau
– 15 g de nonylphénol éthoxylé avec 30 moles d'oxyde d'éthylène
– 6 g de TRITON X 200 commercialisé par la Société ROHM et HAAS
– 1,26 g de bicarbonate de sodium
– 0,63 g de n-dodécylmercaptan
– 3,1 g de persulfate de sodium.
En fin d'introduction, on ajoute une solution de 0,5g de persulfate d'ammonium dans 5g d'eau puis on abandonne le milieu réactionnel 45 minutes sous agitation à 85 ± 2°C. Après refroidissement à la température ambiante et filtration, on obtient 1044g de dispersion aqueuse à 64% environ d'extrait sec, présentant un pH de 4,85 et une viscosité Brookfield de 240 mPa.s (axe 2 vitesse 20).

## EXEMPLE 3

(Exemple de comparaison)

On reproduit l'exemple 2 en absence de N-allyl acétoacétamide. On obtient ainsi 1025g de dispersion aqueuse à 64% environ d'extrait sec, présentant un pH de 4,85 et une viscosité Brookfield de 204 mPa.s (axe 2, vitesse 20).

## EXEMPLE 4

On prépare une composition adhésive en mélangeant :
– 725 g de silice,
– 8 g d'hexane,
– 8 g de propylèneglycol,
– 3 g d'éther de cellulose (viscosité 30.000)
– 1,5 g d'agent bactéricide,

– 1 g d'agent antimoussant,

– 1,5 g d'agent dispersant

– x g de dispersion selon l'invention.

Que l'on complète à 1000g avec de l'eau.

Cette composition est utilisée pour le collage de carreaux, en grès cérame, 5cm par 5cm, sur une éprouvette normalisée en béton. (cf cahier des Prescriptions Techniques d'exécution des revêtements muraux extérieurs cellés au moyen d'adhésifs sans ciment, n° 255-4 de Décembre 1984). Cette éprouvette est ensuite séchée pendant 7 jours à 23°C dans une atmosphère à 50% d'humidité relative, puis on détermine l'adhésion des carreaux avec un dynamomètre (vitesse 20mm/min). L'éprouvette est ensuite immergée pendant 7 jours dans l'eau à la température ambiante, puis après un séchage de 4 heures à la température ambiante, on détermine de nouveau l'adhésion des carreaux. Les résultats obtenus sont donnés dans le tableau suivant :

| | Xg | Résistance En Kg/cm2 | |
|---|---|---|---|
| | | Sec | Humide |
| Dispersion selon l'exemple 1 | 160 | > 10 | 6 |
| Dispersion selon l'exemple 2 | 124 | > 10 | 6,3 |
| Dispersion témoin (exemple 3) | 124 | > 10 | 0 |

A l'examen de ce tableau, on constate que l'emploi de la dispersion selon la présente invention conduit à des collages présentant une résistance à l'état humide très nettement supérieure à celle acquise par l'emploi de dispersion aqueuse classique de polymères styrène-acrylique.

Il va de soi, que la présente invention n'a été décrite qu'à titre purement explicatif et nullement limitatif et que toute modification utile pourra y être apportée au niveau des équivalences sans sortir de son cadre.

**Revendications**

**Revendications pour les Etats contractants suivants : AT, BE, CH, DE, FR, GB, GR, IT, LI, LU, NL, SE**

1. Dispersion aqueuse de polymère du type styrène-acrylique, caractérisée par le fait qu'elle contient au moins un copolymère à base de 0,5 à 5% en poids de N-allyl acétoacétamide (A) et de 99,5 à 95% en poids d'un mélange de monomères (B) constitué par 90 à 99,9% en poids de styrène et d'au moins un monomère choisi parmi les (méth) acrylates d'alkyle en $C_1$-$C_8$ et de 10 à 0,1 % en poids d'au moins un monomère choisi parmi l'acide acrylique, l'acide méthacrylique, l'acrylamide et le méthacrylamide.

2. Dispersion aqueuse selon la revendication 1, caractérisée en ce que le copolymère comprend en outre, pour 100 parties en poids des monomères (A) et (B), jusqu'à 3 parties en poids d'au moins un monomère réticulant choisi parmi les N-alphahydroxyalkylamides des acides acrylique et méthacrylique, les oligoacrylates et oligométhacrylates de polyols.

3. Dispersion selon l'une des revendications 1 et 2 caractérisée en ce que sa teneur en matières solides est comprise entre 40 et 65% en poids.

4. Application de la dispersion selon l'une des revendications 1 à 3 à l'obtention de composition adhésive de bonne résistance à l'eau.

5. Application selon la revendication 4 à l'obtention de composition adhésive de bonne résistance à l'eau convenant notamment dans le domaine des carrelages.

**Revendications pour l'Etat contractant suivant : ES**

1. Dispersion aqueuse de polymères du type styrène-acrylique, caractérisée par le fait qu'elle contient au moins un copolymère à base de 0,5 à 5 % en poids de N-allyl acétoacétamide (A) et de 99,5 à 95 % en poids d'un mélange de monomères (B) constitué par 90 à 99,9 % en poids de styrène et d'au moins un monomère choisi parmi les (meth)acrylates d'alkyle en $C_1$-$C_8$ et de 10 à 0,1 % en poids d'au moins un monomère choisi parmi l'acide acrylique, l'acide méthacrylique, l'acrylamide et le méthacrylamide.

2. Dispersion aqueuse selon la revendication 1, caractérisée en ce que le copolymère comprend en outre, pour 100 parties en poids des monomères (A) et (B), jusqu'à 3 parties en poids d'au moins un monomère réticulant choisi parmi les N-alphahydroxyalkylamides des acides acrylique et méthacrylique, les oligoacrylates et les oligométhacrylates de polyols.

3. Dispersion selon l'une des revendications 1 et 2 caractérisée en ce que sa teneur en matières solides est comprise entre 40 et 65 % en poids.

4. Application de la dispersion selon l'une des revendications 1 à 3 à l'obtention de composition adhésive de bonne résistance à l'eau.

5. Application selon la revendication 4 à l'obtention de composition adhésive de bonne résistance à l'eau convenant notamment dans le domaine des carrelages.

6. Procédé de préparation d'une dispersion telle que définie à l'une des revendications 1 à 3, caractérisé en ce que l'on effectue une polymérisation en émulsion aqueuse des monomères (A) et (B).

7. Procédé selon la revendication 6, caractérisé en ce qu'il est effectué en pH acide.

8. Procédé selon la revendication 6 ou 7, caractérisé en ce qu'il est réalisé en présence de 0,5 à 10 % en poids par rapport au poids des monomères, d'au moins un agent dispersant non ionique ou anionique.

9. Procédé selon la revendication 6, 7 ou 8 caractérisé en ce qu'il est réalisé en présence de 0,1 à 3 % en poids par rapport au poids des monomères, d'au moins un amorceur de polymérisation générateur de radicaux libre associé si désiré à un accélérateur de polymérisation.

10. Procédé selon l'une des revendications 6 à 9, caractérisé en ce qu'il est réalisé en présence d'un agent de transfert.

**Claims**

**Claims for the following Contracting States : AT, BE, CH, DE, FR, GB, GR, IT, LI, LU, NL, SE**

1. Aqueous styrene-acrylic type polymer dispersion characterized in that it contains at least one copolymer consisting of 0.5 to 5 % by weight of N-allylacetoacetamide monomer (A) and 99.5 to 95 % by weight of a mixture of monomers (B) consisting of 90 to 99.9 % by weight of styrene and of at least one monomer selected from $C_1$ to $C_8$ alkyl(meth)acrylates and 10 to 0.1% by weight of at least one monomer selected from acrylic acid, methacrylic acid, acrylamide and methacrylamide.

2. Aqueous dispersion according to claim 1 characterized in that the copolymer further comprises for 100 parts by weight of monomers (A) and (B) up to three parts by weight of at least one reticulating monomer selected from the N-alphahydroxyalkylamide of acrylic and methacrylic acid or polyol oligoacrylates and oligomethacrylates.

3. Dispersion according to claims 1 and 2 characterized in that it has a solid matter content of between 40 and 65 % by weight.

4. Use of a dispersion according to anyone of claims 1 to 3 in a adhesive composition having good water resistance.

5. Use of a dispersion according to claim 4 in an adhesive composition having good water resistance and particularly suitable for use in tiling.

**Claims for the following Contracting States : ES**

1. Aqueous styrene-acrylic type polymer dispersion characterized in that it contains at least one copolymer consisting of 0,5 to 5 % by weight of N-allylacetoacetamide monomer (A) and 99,5 to 95 % by weight of a mixture of monomers (B) consisting of 90 to 99,9 % by weight of styrene and of at least one monomer selected from $C_1$ to $C_8$ alkyl(meth)acrylates and 10 to 0,1 % by weight of at least one monomer selected from acrylic acid, methacrylic acid, acrylamide and methacrylamide.

2. Aqueous dispersion according to claim 1 characterized in that the copolymer further comprises for 100 parts by weight of monomers (A) and (B) up to three parts by weight of at least one reticulating monomer selected from the N-alphahydroxyalkylamide of acrylic and methacrylic acid or polyol oligoacrylates and oligomethacrylates,

3. Dispersion according to claims 1 and 2 characterized in that it has a solid matter content of between 40 and 65 % by weight.

4. Use of a dispersion according to anyone of claims 1 to 3 in an adhesive composition having good water resistance.

5. Use of a dispersion according to claim 4 in an adhesive composition having good water resistance and particularly suitable for use in tiling.

6. A process for preparing a dispersion such as defined in anyone of claims 1 to 3, characterized in that a polymerisation of monomers (A) and (B) is carried out in aqueous emulsion,

7. A process according to claim 6, characterized in that it is carried out at an acidic pH.

8. A process according to claim 6 or 7, characterized in that it is carried out in the presence of 0, 5 to 10 % by weight with respect to monomer weight of at least one nonionic or anionic dispersing agent.

9. A process according to claim 6, 7 or 8, characterized in that it is carried out in the presence of 0,1 to 3 % by weight with respect to monomer weight of at least one polymerisation initiator generating free radicals combined if necessary with a polymerisation accelerator.

10. A process according to anyone of claims 6 to 9, characterized in that it is carried out in the presence of a transfer agent.

**Patentansprüche**

**Patentansprüche für folgende Vertragsstaaten : AT, BE, CH, DE, FR, GB, GR, IT, LI, LU, NL, SE**

1. Wässerige Styrol-Acrylpolymerdispersion, dadurch gekennzeichnet, daß sie mindestens ein Copolymer auf Basis von 0,5 bis 5 Gew.% N-Allylacetoacetamid (A) und 99,5 bis 95 Gew.% einer Monomermischung (B) bestehend aus 90 bis 99,9 Gew.% Styrol und mindestens einem Monomer ausgewählt aus den $C_1$-$C_8$-Alkyl(meth)acrylaten und 10 bis 0,1 Gew.% mindestens eines Monomers ausgewählt aus Acrylsäure, Methacrylsäure, Acrylamid und Methacrylamid enthält.

2. Wässerige Dispersion nach Anspruch 1, dadurch gekennzeichnet, daß das Copolymer außerdem pro 100 Gew.Teile Monomere (A) und (B) bis zu 3 Gew.Teile mindestens eines monomeren Vernetzungsmittels ausgewählt aus den N-$\alpha$-Hydroxyalkylamiden von Acryl- und Methacrylsäure, den Oligoacrylaten und Oligomethacrylaten von Polyolen umfaßt.

3. Dispersion nach einem der Ansprüche 1 und 2, dadurch gekennzeichnet, daß ihr Feststoffgehalt 40 bis 65 Gew.% beträgt.

4. Verwendung der Dispersion nach einem der Ansprüche 1 bis 3 zum Erhalten eines Klebstoffes mit guter Wasserfestigkeit.

5. Verwendung nach Anspruch 4 zum Erhalten des Klebstoffes mit guter Wasserfestigkeit, der insbesondere auf dem Gebiet der keramischen Fliesen geeignet ist.

**Patentansprüche für folgende Vertragsstaat : ES**

1. Wässerige Styrol-Acrylpolymerdispersion, dadurch gekennzeichnet, daß sie mindestens ein Copolymer auf Basis von 0,5 bis 5 Gew.% N-Allylacetoacetamid (A) und 99,5 bis 95 Gew.% einer Monomermischung (B) bestehend aus 90 bis 99,9 Gew.% Styiol und mindestens einem Monomer ausgewählt aus den $C_1$-$C_8$-Alkyl(meth)acrylaten und 10 bis 0,1 Gew.% mindestens eines Monomers ausgewählt aus Acrylsäure, Methacrylsäure, Acrylamid und Methacrylamid enthält.

2. Wässerige Dispersion nach Anspruch 1, dadurch gekennzeichnet, daß das Copolymer außerdem pro 100 Gew.Teile Monomere (A) und (B) bis zu 3 Gew.Teile mindestens eines monomeren Vernetzungsmittels ausgewählt aus den N-$\alpha$-Hydroxyalkylamiden von Acryl- und Methacrylsäure, den Oligoacrylaten und Oligomethacrylaten von Polyolen umfaßt.

6

3. Dispersion nach einem der Ansprüche 1 und 2, dadurch gekennzeichnet, daß ihr Feststoffgehalt 40 bis 65 Gew.% beträgt.

4. Verwendung der Dispersion nach einem der Ansprüche 1 bis 3 zum Erhalten eines Klebstoffes mit guter Wasserfestigkeit.

5. Verwendung nach Anspruch 4 zum Erhalten des Klebstoffes mit guter Wasserfestigkeit, der insbesondere auf dem Gebiet der keramischen Fliesen geeignet ist.

6. Verfahren zur Herstellung einer Dispersion nach einem der Ansprüche 1 bis 3, dadurch gekennzeichnet, daß eine Polymerisation der Monomere (A) und (B) in wässeriger Emulsion durchgeführt wird.

7. Verfahren nach Anspruch 6, dadurch gekennzeichnet, daß es bei saurem pH durchgeführt wird.

8. Verfahren nach Anspruch 6 oder 7, dadurch gekennzeichnet, daß es in Anwesenheit von 0,5 bis 10 Gew.%, bezogen auf das Gewicht der Monomere, mindestens eines nicht-ionischen oder anionischen Dispergiermittels durchgeführt wird.

9. Verfahren nach Anspruch 6, 7 oder 8, dadurch gekennzeichnet, daß es in Anwesenheit von 0,1 bis 3 Gew.%, bezogen auf das Gewicht der Monomere, mindestens eines freie Radikale bildenden Polymerisationsinitiators, wenn gewünscht assoziiert mit einem Polymerisationsbeschleuniger, durchgeführt wird.

10. Verfahren nach einem der Ansprüche 6 bis 9, dadurch gekennzeichnet, daß es in Anwesenheit eines Transfermittels durchgeführt wird.